# EUROPÄISCHE PATENTSCHRIFT

(11) **EP 1 760 372 B1**
(45) Veröffentlichungstag und Bekanntmachung des Hinweises auf die Patenterteilung: **16.04.2014**
(21) Anmeldenummer: 06017622.9
(22) Anmeldetag: 24.08.2006
(51) Int. Cl.: F16J 15/44, F01D 11/02

(54) **Getriebeexpander oder -kompressor mit einer Wellendichtung**
Transmission expander or compressor with a shaft seal
Expanseur ou compresseur à transmission comportant un joint d'étanchéité pour un arbre

(30) Priorität: 29.08.2005 DE 102005041003
(43) Veröffentlichungstag der Anmeldung: 07.03.2007
(73) Patentinhaber: MAN Diesel & Turbo SE, 86153 Augsburg (DE)
(72) Erfinder: Thieme, Klaus, 46119 Oberhausen (DE); Schnieders, Werner, 46359 Heiden (DE)
(74) Vertreter: Krause, Thomas

(56) Entgegenhaltungen:
- EP-A- 1 014 079
- EP-A- 1 193 370
- WO-A-01/31235
- DE-C1- 4 234 739
- US-A- 3 351 396
- US-A1- 2004 126 225
- DATABASE GOOGLE [Online] 1st version dated on 25.03.2003 11. März 2005 (2005-03-11), RICH CURTIS, JOHN KEARNEY, BRUCE G.MCMORDIE: "Abradable coatings for sealing blade tips in IGT compressors" XP002432110 gefunden im HTTP://WWW.CTC2.ORG/IMAGES/SERMATECH%20WE2 0-06%20PRESENTATION%20-%20CTCC.PPT.PDF

## Beschreibung

Die Erfindung betrifft einen Getriebeexpander oder einen Getriebekompressor mit den Merkmalen des Oberbegriffes des Patentanspruches 1.

Die Abdichtung des Prozessraumes im Wellenbereich eines Getriebeexpanders oder -kompressors gehört zu den wichtigsten Merkmalen für den sicheren Betrieb einer Getriebemaschine. Der sichere Betrieb einer Getriebemaschine hat eine noch größere Bedeutung, wenn der Betrieb mit aggressiven oder toxischen Gasen erfolgt. Um Gasaustritte aus dem Maschinenbereich ins Freie zu verhindern, ist die Ausführung der Dichtung entscheidend.

Aus der WO 01/031235 ist ein Turbokompressor nach dem Oberbegriff des Anspruchs 1 bekannt, bei dem eine Dichtungsanordnung einen Prozessraum gegen einen Ölsumpf abdichtet. Hier zu wird ein Öl-Sperrgasgemisch unter dem Überdurch des Zugeführten Sperrgases durch eine gedrosselte Leitung abgeführt.

Der Erfindung liegt daher die Aufgabe zugrunde, die gattungsgemäße Wellendichtung derart zu verbessern, dass die Sperrgasmenge bzw. die Leckagen gering sind und dass die Wellendichtung vor Korrosion geschützt ist.

Die Aufgabe wird bei einem Getriebeexpander oder -kompressor durch die kennzeichnenden Merkmale des Patentanspruches 1 gelöst. Vorteilhafte Ausgestaltungen der Erfindung sind in den Unteransprüchen angegeben.

Durch die erfindungsgemäß gestaltete Wellendichtung wird erreicht, dass ein Teil des Sperrgases ins Innere der Maschine und der andere Teil des Sperrgases in Richtung Absaugung strömen. Dadurch wird ein Eindringen von Prozessgas in die Dichtung verhindert. Um diese Sperrgasmengen bzw. Leckagen klein zu halten, werden eine Anzahl von Dichtungsspitzen angeordnet, die aus dem Vollen gedreht sind und die den Spalt zwischen Welle und Dichtung so weit wie möglich verengen, Zusätzlich wird zur Minimierung der Sperrgasmengen bzw. Leckagen die Fläche gegenüber den Dichtungsspitzen mit einer Einlaufbeschichtung versehen. Der Vorteil dieser Einlaufbeschichtung besteht zum einen in der hohen Temperaturbeständigkeit von ca. 750°C und zum andern in der sehr guten Korrosionsbeständigkeit. Außerdem wird durch die Zusammensetzung der Einlaufbeschichtung ein optimales Verhältnis von Erosion der Beschichtung durch Festpartikel im Dichtungsgas und im Verschleiß der Dichtungsspitzen erreicht.

Ein Ausführungsbeispiel der Erfindung ist in der Zeichnung dargestellt und wird im Folgenden näher erläutert. Es geigen:
- Fig. 1: einen Längsschnitt durch einen teilweise dargestellten Getriebeexpander und

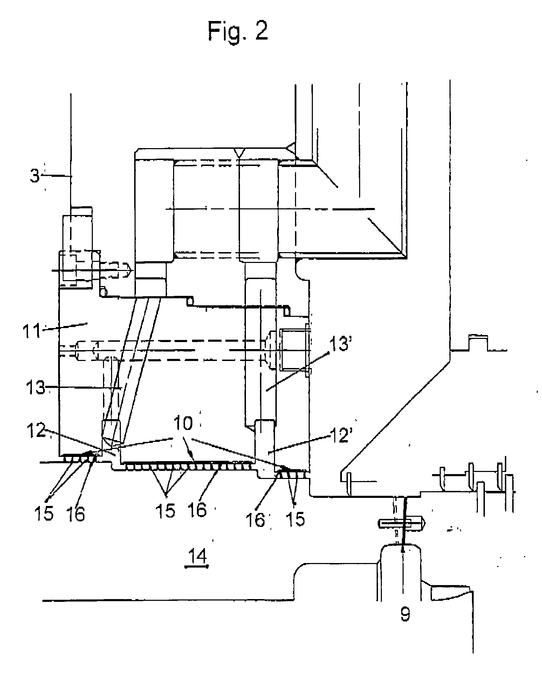

- Fig. 2: die Einzelheit nach Fig. 1,

Der dargestellte Getriebeexpander ist ein Einwellen-Expander radialer Bauart zur Entspannung von Luft, Dampf oder brennbaren oder toxischen Gasen. Die nachfolgenden Ausführungen treffen auch auf Mehrwellen-Expander und auf Getriebekompressoren radialer Bauart in Ein- oder Mehrwellenausführung zu.

Der Expander umfasst ein in einem Gehäuse 20 umlaufendes Laufrad 1. Das Gehäuse 20 besteht aus einem Einströmteil 2 und einer 3. Der Expander treibt einen Motor/Generator direkt oder indirekt über ein nicht dargestelltes zwischengeschaltetes Getriebe an.

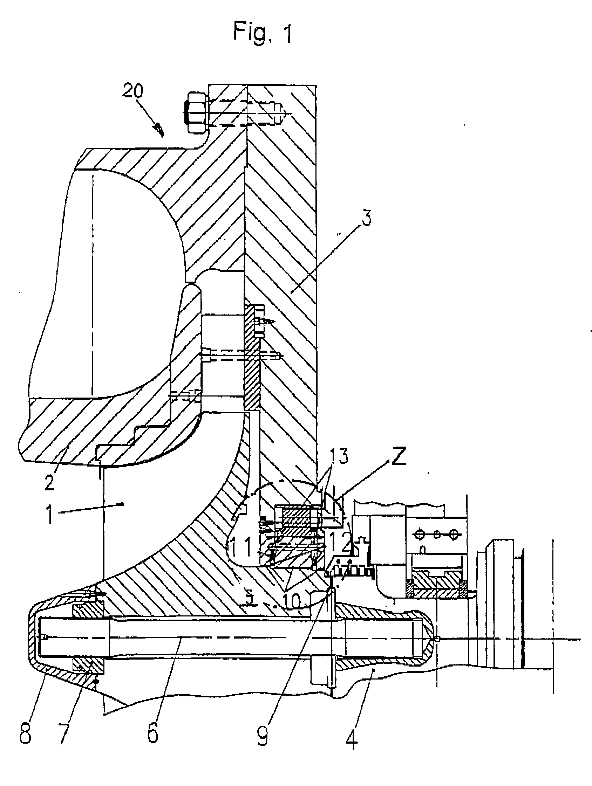

Von dem Abtrieb des Expanders ist in Fig. 1 nur eine Abtriebswelle 4 sichtbar. An der Abtriebswelle 4 ist das Laufrad 1 fliegend angeordnet. Eine Nabe 5 des Laufrades 1 ist dazu über einen zentralen Zuganker 6 mit der Abtriebswelle 4 verbunden. Der Zuganker 6 durchdringt die Nabe 5 des Laufrades 1 und die Abtriebswelle 4. Dabei greift der Zuganker 6 mit einem Gewinde in ein Innengewinde in der Abtriebswelle 4 ein und wird über eine Mutter 7 in einer Einlaufkappe 8 des Laufrades 1 verspannt.

An den einander gegenüberstehenden Stirnflächen sind die Nabe 5 des Laufrades 1 und die Abtriebswelle 4 jeweils mit einer Verzahnung 9 versehen. Die Zähne der Verzahnung 9 greifen ineinander und bilden zusammen eine Verzahnung nach der Art der Hirth-Verzahnung. Über die Verzahnung 9 in Verbindung mit dem zentralen Zuganker 6 erfolgt die übertragung des Drehmomentes von dem Laufrad 1 auf die Abtriebswelle 4.

Der Innen- oder Prozessraum des Expanders ist gegenüber der Außenatmosphäre durch eine Dichtungsanordnung 10 abgedichtet. Die Dichtungsanordnung 10 ist in einem feststehenden Dichtungsring 11 untergebracht, der mit der Rückwand 3 des Gehäuses des Expanders verbunden ist.

Die später näher beschriebene Dichtungsanordnung 10 umschließt eine als Zapfen 14 ausgebildete rückwärtige Verlängerung der Nabe 5 des Laufrades 1. Durch diese Anordnung ist die Verzahnung 9 zwischen der Nabe 5 des Laufrades 1 und der Abtriebswelle 4 nach außen in den den Expander umgebenden atmosphärischen Bereich verlegt. Die Verzahnung 9 kommt daher nicht mit dem Prozessgas im Inneren des Expanders in Berührung. Für den Fall, dass der Expander mit aggressiven Medien betrieben wird, besteht dadurch keine Gefahr mehr, dass durch Leckage diese Medien mit der Verzahnung 9 in Berührung kommen und zu einer Korrosion der Verzahnung 9 führen.

Die Dichtung der Dichtungsanordnung 10 ist als Labyrinthdichtung in Dreifachausführung ausgebildet und besteht aus drei hintereinander liegenden Dichtungsabschnitten mit jeweiligen Dichtungsspitzen 15. Die Dichtungsspitzen 15 sind an der Nabe 5 des Laufrades 1 angebracht und aus dem Vollen gedreht. Jeweils zwischen zwei Dichtungsabschnitten befindet sich eine Ringkammer 12, 12', die mit einer nach außen geführten Leitung 13, 13' in Verbindung steht. Der dem Expander zugewandten Ringkammer 12 wird über die Leitung 13 ein Sperrgas mit einem den Druck des Prozessgases im Inneren des Expanders übersteigenden Druck zugeführt. Über die Leitung 13' wird Sperrgas aus der der Verzahnung 9 zugewandten und dem Expander abgewandten Ringkammer 12' abgesaugt. Auf diese Weise wird erreicht, dass ein Teil des Sperrgases in Richtung Laufrad und der andere Teil des Sperrgases in Richtung Absaugung strömen, wodurch ein Eindringen von Prozessgas in die Dichtung verhindert wird.

Die den Dichtungsspitzen 15 gegenüberliegende Dichtungsfläche auf dem Dichtungsring 11 ist mit einer Einlaufbeschichtung 16 überzogen. Die Einlaufbeschichtung 16 ist eine APS (Air Plasma Spray)-Beschichtung bestehend aus einer dichten CoNiCrAlY-Haftschicht und einer porösen CoNiCrAlY-BN-Polyester-Oberschicht. Die beiden Schichten haben folgende chemische Zusammensetzung: Haftschicht: 32% Ni, 21% Cr, 8% Al, 0,4% Y, Co Rest. Oberschicht: 25% Ni, 17% Cr, 6% Al, 0,4% Y, 63,6% Bornitrid (EN), 15% Polyester, Co Rest,

Die Haftschicht dient zur besseren Haftung der Oberschicht und zur besseren Korrosionsbeständigkeit der Beschichtung. Zur optimierung der Einlaufeigenschaft wird neben der Härte auch die Porosität der Beschichtung gezielt eingestellt. Vorzugsweise soll die Porosität 40% betragen.

Der Herstellungsprozess der Einlaufbeschichtung 16 auf dem Dichtungsring 11 umfasst die folgenden Schritte:
1. Aufspritzen der Haftschicht nach dem APS-Verfahren;
2. Aufspritzen der Oberschicht aus CrNiCrAlY-BN-Polyester nach dem APS-Verfahren;
3. Wärmebehandlung / Glühen des Dichtungsringes 11, damit der Polyesteranteil ausgast und damit die definierte Porosität eingestellt wird.

## Patentansprüche

1. Getriebeexpander oder -kompressor mit einem oder mehreren in einem Gehäuse (20) umlaufenden Laufrädern (1), wobei jedes Laufrad (1) fliegend auf einer Welle (4) angeordnet und durch eine mit dem Gehäuse verbundene Dichtungsanordnung (10) abgedichtet ist, die aus auf der Welle (4) oder einer Nabe (5) des Laufrades (1) aufgebrachten Dichtungsspitzen (15) besteht, die von einem feststehenden Dichtungsring (11) umschlossen sind, wobei die Dichtungsspitzen (15) in drei hintereinander liegenden Dichtungsabschnitten angeordnet sind, wobei zwischen jeweils zwei Dichtungsabschnitten eine Ringkammer (12, 12') angeordnet ist, und wobei die dem Innenraum des Getriebeexpanders oder -kompressors zugewandte Ringkammer (12) mit einer Zuführung eines Sperrgases ausgerüstet ist, dessen Druck höher als der Druck im Innenraum des Getriebeexpanders oder - kompressors ist, **dadurch gekennzeichnet, dass** die dem Innenraum des Getriebeexpanders oder -kompressors abgewandte Ringkammer (12') mit einer Absaugung des Sperrgases versehen ist.

2. Getriebeexpander oder -kompressor nach Anspruch 1, **dadurch gekennzeichnet, dass** die den Dichtungsspitzen (15) gegenüberliegende Dichtungsfläche des feststehenden Dichtungsringes (11) mit einer Einlaufbeschichtung (16) versehen ist, die aus einer dichten Haftschicht aus CoNiCrAlY und einer porösen, temperatur- und korrosionsbeständigen Oberschicht aus CoNiCrAlY + BN + Polyester besteht.

3. Getriebeexpander oder -kompressor nach Anspruch 2, **dadurch gekennzeichnet, dass** der Dichtungsring (11) eine definierte einstellbare Porosität aufweist, die mit einer Wärmebehandlung des Dichtungsringes (11) mit einer Ausgasung des Polyester-Anteils in der Oberschicht der Einlaufbeschichtung verbunden ist.

4. Getriebeexpander oder -kompressor nach einem der Ansprüche 1 bis 3, **dadurch gekennzeichnet, dass** die Dichtungsspitzen (15) aus dem Vollen gedreht sind.

5. Getriebeexpander oder -kompressor nach einem der Ansprüche 1 bis 4, **dadurch gekennzeichnet, dass** eine Nabe (5) jedes Laufrades (1) und die dazu gehörende Welle (4) mit einer ineinander greifenden Verzahnung (9) versehen sind, die Nabe (5) des Laufrades (1) durch die Dichtungsanordnung (10) hindurchgeführt ist, und die Verzahnung (9) außerhalb der Dichtungsanordnung (10) des Getriebexpanders oder -kompressors vorgesehen ist.

## Claims

1. A transmission expander or compressor with one or a plurality of impellers (1) revolving in a housing (20), wherein each impeller (1) is floatingly arranged on a shaft (4) and is sealed through a sealing arrangement (10) connected to the housing, which consists of sealing tips (15) applied onto the shaft (4) or a hub (5) of the impeller (1), which are enclosed by a fixed sealing ring (11), wherein the sealing tips (15) are arranged in three sealing sections situated one behind the other, wherein between two sealing sections each a ring chamber (12, 12') is arranged, and wherein the ring chamber (12) facing the interior space of the transmission expander or compressor is equipped with a feed of a barrier gas, the pressure of which is higher than the pressure in the interior space of the transmission expander or compressor, **characterized in that** the ring chamber (12') facing away from the interior space of the transmission expander or compressor is provided with an extraction of the barrier gas.

2. The transmission expander or compressor according to Claim 1, **characterized in that** the sealing surface of the fixed sealing ring (11) located opposite the sealing tips (15) is provided with a running-in coating (16), which consists of a tight bond layer of CoNiCrAlY and a porous, temperature and corrosion-resistant upper layer of CoNiCrAlY + BN + polyester.

3. The transmission expander or compressor according to Claim 2, **characterized in that** the sealing ring (11) has a defined adjustable porosity, which is connected to a heat treatment of the sealing ring (11) with gassing-out of the polyester component in the upper layer of the running-in coating.

4. The transmission expander or compressor according to any one of the Claims 1 to 3, **characterized in that** the sealing tips (15) are turned out of the solid.

5. The transmission expander or compressor according to any one of the Claims 1 to 4, **characterized in that** a hub (5) of each impeller (1) and the associated shaft (4) are provided with an inter-engaging toothing (9), the hub (5) of the impeller (1) is passed through the sealing arrangement (10), and the toothing (9) is provided outside the sealing arrangement (10) of the transmission expander or compressor.

## Revendications

1. Compresseur à transmission ou détendeur à transmission comprenant une ou plusieurs roues gonflables (1) entourant un logement (20), dans lequel chaque roue porteuse (1) est disposée de manière volante sur un arbre (4) et est étanchéifiée par un dispositif d'étanchéité (10) relié au logement, qui est constitué de pointes de joint d'étanchéité (15) ménagées sur l'arbre (4) ou un moyeu (5) de la roue porteuse (1), qui sont enveloppées par une bague de joint d'étanchéité (11) fixe, dans lequel les pointes de joint d'étanchéité (15) sont disposées dans trois portions de joint d'étanchéité situées les unes derrière les autres, dans lequel entre deux portions de joint d'étanchéité respectives une chambre annulaire (12, 12') est disposée et dans lequel la chambre annulaire (12) tournée vers l'espace intérieur du compresseur à transmission ou détendeur à transmission est équipée d'une alimentation en gaz de barrage, dont la pression est supérieure à la pression dans l'espace intérieur du compresseur à transmission ou détendeur à transmission, **caractérisé en ce que** la chambre annulaire (12') qui se détourne de l'espace intérieur du compresseur à transmission ou détendeur à transmission est pourvue d'une aspiration du gaz de barrage.

2. Compresseur à transmission ou détendeur à transmission selon la revendication 1, **caractérisé en ce que** la surface d'étanchéité de la bague de joint d'étanchéité (11) fixe en vis-à-vis des pointes de joint d'étanchéité (15) est pourvue d'un revêtement de rodage (16), qui est constitué d'une couche adhérente étanche en CoNiCrAlY et d'une couche supérieure poreuse, résistante à la chaleur et à la corrosion en CONiCrAlY + NB + polyester.

3. Compresseur à transmission ou détendeur à transmission selon la revendication 2, **caractérisé en ce que** la bague de joint d'étanchéité (11) présente une porosité définie réglable, qui est liée à un traitement thermique de la bague de joint d'étanchéité (11) avec un dégazage de la fraction de polyester de la surface supérieure du revêtement de rodage.

4. Compresseur à transmission ou détendeur à transmission selon une des revendications 1 à 3, **caractérisé en ce que** les pointes de joint d'étanchéité (15) sont tournées dans la matière pleine.

5. Compresseur à transmission ou détendeur à transmission selon une des revendications 1 à 4, **caractérisé en ce que** un moyeu (5) de chaque roue porteuse (1) et l'arbre afférent (4) sont pourvus d'une denture (9) s'engrenant mutuellement, le moyeu (5) de la roue porteuse (1) est guidé à travers le dispositif de joint d'étanchéité (10) et la denture (9) est prévue à l'extérieur du dispositif de joint d'étanchéité (10) du compresseur à transmission ou détendeur à transmission.
